# EUROPÄISCHE PATENTSCHRIFT

(11) **EP 2 977 577 B1**
(45) Veröffentlichungstag und Bekanntmachung des Hinweises auf die Patenterteilung: **18.04.2018**
(21) Anmeldenummer: 15173494.4
(22) Anmeldetag: 24.06.2015
(51) Int. Cl.: F01N 3/20, F01N 3/035, F01N 3/28

(54) **ABGASSYSTEM UND KRAFTFAHRZEUG**
EXHAUST SYSTEM AND MOTOR VEHICLE
SYSTÈME DE GAZ D'ÉCHAPPEMENT ET VÉHICULE AUTOMOBILE

(30) Priorität: 24.07.2014 DE 102014214588; 02.12.2014 DE 202014009592 U
(43) Veröffentlichungstag der Anmeldung: 27.01.2016
(73) Patentinhaber: Volkswagen Aktiengesellschaft, 38440 Wolfsburg (DE)
(72) Erfinder: Biener, Martin, 38173 Veltheim/Ohe (DE); Schmidt, Arnd, 38518 Gifhorn (DE)

(56) Entgegenhaltungen:
- EP-A1- 2 055 909
- WO-A1-2014/057165
- DE-A1- 19 932 778
- DE-A1-102010 005 814
- US-A1- 2004 096 372

## Beschreibung

Die Erfindung betrifft ein Abgassystem für ein Kraftfahrzeug, sowie ein Kraftfahrzeug mit einem solchen Abgassystem.

Es ist bekannt, ein von einer Verbrennungskraftmaschine, insbesondere einem Dieselmotor, erzeugtes Abgas einer Abgasnachbehandlung zu unterziehen, indem es durch einen in einem Abgaskanal angeordneten Katalysator geführt wird. Einfache Oxidationskatalysatoren, die üblicherweise zur Abgasnachbehandlung in Dieselkraftmaschinen verwendet werden, umfassen im Wesentlichen ein katalytisch aktives Material, das auf der Oberfläche einer porösen Trägersubstanz fixiert ist. Das katalytisch aktive Material ist meistens ein Edelmetall, häufig ein Metall der Platingruppe. Eine Abgasreinigung an Oxidationskatalysatoren findet statt, indem reduzierende Schadstoffbestandteile des Abgases, zu denen unverbrannte Kohlenwasserstoffe (HC) sowie Kohlenmonoxid (CO) zählen, durch im Abgas vorhandene Stickoxide (NOₓ) und Sauerstoff zu weniger umweltrelevanten Produkten oxidiert werden. Zudem beschleunigt der Oxidationskatalysator die Oxidation von Stickstoffmonoxid (NO) zu Stickstoffdioxid (NO₂), welches für die Unterhaltung eines kontinuierlichen Partikelabbrandes im Dieselmotorgas bei niedrigen Temperaturen bei zirka 300°C eine wichtige Rolle spielt. Diese Reaktionen werden durch die Gegenwart der katalytischen Materialien sowie einer erhöhten Katalysatortemperatur ermöglicht.

Üblicherweise werden Katalysatoren für Abgassysteme von Verbrennungsmotoren stromab eines Abgasturboladers angeordnet. Die technische Entwicklung führt jedoch dazu, dass insbesondere bei Dieselmotoren die Abgastemperaturen durch optimierte Brennverfahren und reibungsreduzierte Grundtriebwerke stark gesunken sind. Dadurch wird die Anspringtemperatur des Katalysators erst spät erreicht. Um dennoch eine frühe Aktivität des Katalysators zu erreichen, wird die Abgastemperatur im Katalysator durch zusätzliche Kraftstoffeinspritzungen künstlich erhöht. Hieraus ergeben sich jedoch Emissions- und Verbrauchsnachteile.

Um dieses Problem zu verringern, wurde bereits die Anordnung eines Katalysators vor, also stromauf, der Turbine versucht. Hier tritt das Problem auf, dass im Nennleistungsbereich des Motors die Abgastemperaturen so hoch werden, dass die katalytische Beschichtung thermisch zerstört wird. Darüber hinaus stellt die Anordnung eines alleinigen Katalysators große Bauraumforderungen und bringt eine hohe thermische Masse mit, die wiederum zu einer Verzögerung in der Anspringzeit führt. Werden alternativ sogenannte Micro-Katalysatoren mit kleinem Volumen und kleiner thermischer Masse eingesetzt, können diese günstiger montiert werden. Die Verwendung solcher Micro-Katalysatoren führt jedoch stets zu Abgasgegendruckproblemen, da die Durchgänge innerhalb des Katalysators schnell von Ablagerungen blockiert werden.

WO 2014/020230 A1 offenbart hierzu einen Katalysator, der stromauf der Turbine in einem parallelen Abgasstrom angeordnet ist. Das Abgas kann abhängig von der Stellung zweier Ventile wahlweise über den Hauptabgasstrom oder den, den Katalysator aufweisenden, parallelen Abgasstrom geführt werden.

In DE 10 2007 017 845 A1 wird eine Brennkraftmaschine beschrieben, die im Abgasstrom stromauf einer Turbine einen im Bypass angeordneten Katalysator zur Aufbereitung des Abgasstroms aufweist.

Die beschriebenen Katalysatoren können Zwei-Wege-Ventile aufweisen, die beispielsweise wie in DE 195 00 501 A1 beschrieben als Klappenventile ausgestaltet sind. Das dort offenbarte Klappenventil zeichnet sich durch zwei Klappen aus, die über eine Welle verbunden sind, wobei die Welle drehbar gelagert ist. Die Klappen sind entweder quer oder parallel zum Fluidstrom angeordnet und geben davon abhängig einen Durchgang des Fluids frei oder blockieren diesen.

Der Einbau derartiger Katalysatoren im Bypass birgt einen hohen zusätzlichen Verschlauchungsaufwand sowie damit verbunden einen hohen Platzbedarf.

Aus der WO 2014/057165 A1 ist weiterhin noch eine Brennkraftmaschine mit einem Verbrennungsmotor, mit einer Hochdruckturbine und einer Niederdruckturbine, die in einen Abgasstrang der Brennkraftmaschine integriert sind, und mit einer Abgasbehandlungseinrichtung bekannt. Mittels einer Strömungskontrollvorrichtung kann die Strömung des Abgases entweder durch die Abgasbehandlungseinrichtung oder daran vorbei geführt werden, wobei auch ein teilweises Führen über die Abgasbehandlungseinrichtung vorgesehen sein kann.

Der Erfindung liegt nun die Aufgabe zugrunde, ein Abgassystem bereitzustellen, das die Nachteile des Standes der Technik überwindet, insbesondere eine verbesserte Abgasaufbereitung beim Kaltstart und einen geringen Wartungsaufwand ermöglicht.

Diese Aufgabe wird durch ein Abgassystem mit den Merkmalen des ersten unabhängigen Anspruchs gelöst. Somit betrifft die Erfindung ein Abgassystem für ein Kraftfahrzeug, welches einen einen Abgasstrom erzeugenden Verbrennungsmotor, einen den Abgasstrom führenden Abgaskanal, eine Turbine als Teil eines Turboladers, eine Abgasbehandlungseinrichtung (vorzugsweise einen Katalysator umfassend) umfasst, die in einem Bypass des Abgaskanals stromauf der Turbine angeordnet ist, und eine Ventileinheit die an einer Abzweigungsstelle des Bypasses im Abgaskanal angeordnet ist. Die Turbine ist über den Abgaskanal mit dem Verbrennungsmotor verbunden. Erfindungsgemäß ist die Abgasbehandlungseinrichtung über einen Strömungseingang und einen Strömungsausgang des Bypasses fluidführend mit dem Abgaskanal verbunden. Die Ventileinheit, welche stromauf, also vor der Turbine im Abgaskanal angeordnet ist, weist zumindest zwei Positionen auf. In einer ersten Position der Ventileinheit ist der Abgaskanal verschlossen, und Strömungseingang und Strömungsausgang sind geöffnet. In einer zweiten Position der Ventileinheit ist der Abgaskanal hingegen geöffnet, und Strömungsein- und Strömungsausgang sind verschlossen. Der Abgasstrom fließt aus dem Verbrennungsmotor bis zum Ventil. In der ersten Position der Ventileinheit wird der Abgasstrom in den Strömungseingang abgezweigt und von dort aus in die Abgasbehandlungseinrichtung geführt. Anschließend tritt der Abgasstrom durch die Abgasbehandlungseinrichtung hindurch und wird über den Strömungsausgang mittels derselben Ventileinheit wieder in den Abgaskanal geleitet, um von dort aus zur Turbine zu gelangen. Befindet sich die Ventileinheit in der zweiten Position, passiert der Abgasstrom die Abgasbehandlungseinrichtung nicht, vielmehr wird die Abgasbehandlungseinrichtung umgangen, sodass der Abgasstrom vom Verbrennungsmotor durch die Ventileinheit hindurch direkt zur Turbine gelangt. Die Abgasbehandlungseinrichtung ist also über eine Ventileinheit in einem zuschaltbaren Bypass im Abgaskanal angeordnet.

Aufgrund der geringeren thermischen Masse, die der Abgasstrom bis zur Turbine passiert, sind die Abgastemperaturen vor der Turbine des Turboladers in Teillast immer ca. 100 K höher als nach der Turbine des Turboladers. Die Anordnung der erfindungsgemäßen Abgasbehandlungseinrichtung in einem über die Ventileinheit schaltbaren Bypass bringt den Vorteil, dass die Abgasbehandlungseinrichtung im Bedarfsfall, beispielsweise bei zu hohen Abgastemperaturen, umgangen wird. Somit werden eine aufgrund zu hoher Abgastemperaturen einsetzende thermische Alterung vermieden und sowohl Schädigungen der Beschichtung als auch zusätzliche Strömungsverluste bei hohen Massenströmungen reduziert. Der hohe Druck und die höhere Temperatur vor der Turbine des Turboladers ermöglichen ferner eine kleiner dimensionierte Abgasbehandlungseinrichtung als bei herkömmlichen Abgassystemen, bei denen die Abgasbehandlungseinrichtung nach der Turbine des Turboladers angeordnet ist. Dies bringt wiederum einen Bauraum- und Materialvorteil mit sich.

Vorzugsweise wird ein stromabwärts gelegener Fluidrücklauf der Abgasbehandlungseinrichtung verschlossen. Es hat sich gezeigt, dass es bei dieser Ausgestaltung im Gegensatz zu herkömmlichen Abgassystemen mit nur einer verschlossenen Seite nicht zu einer Pulsation des Abgasstromes und somit nicht zu einem signifikanten Stofftransport kommt, und somit verhindert wird, dass das Volumen der nach dem Ventil verbleibenden Strecke durch den stromab offenen Kanal zyklisch mit heißem Abgas be- und entladen wird, was trotz Ventil zu einer thermischen Schädigung der katalytischen Beschichtung führt.

Die Anordnung des Strömungsein- und Strömungsausgangs der Abgasbehandlungseinrichtung innerhalb nur einer Ventileinheit, das heißt in diesem Zusammenhang beider in derselben, birgt weiterhin den Vorteil, dass im Vergleich zu herkömmlichen Anordnungen kein zusätzlicher Verrohrungsaufwand nötig ist. Darüber hinaus ist ein leichter Wechsel beziehungsweise eine Wartung der Abgasbehandlungseinrichtung möglich. Der Aufbau eines bisher gebräuchlichen Abgaskrümmermoduls kann weitestgehend beibehalten werden, sodass auch ein Umbau eines bestehenden Abgassystems mit minimierten Umbauerfordernissen möglich ist.

Vorzugsweise sind Strömungsein- und Strömungsausgang in Gegenstromführung zueinander in dem Bypass geführt und derart voneinander entkoppelt, dass kein Fluidaustausch möglich ist. Insbesondere sind Strömungsein- und Strömungsausgang im Bypass benachbart zueinander angeordnet und durch eine Zwischenwand getrennt, sodass jeweils ein Raum ausgebildet ist, welcher den Abgaskanal mit dem Katalysator verbindet. Der Strömungseingang liegt dabei stromauf der Abgasbehandlungseinrichtung, während der Strömungsausgang stromab der Abgasbehandlungseinrichtung angeordnet ist. Mit anderen Worten ist der Bypass über eine T-förmige Abzweigstelle mit dem Abgaskanal verbunden, wobei Strömungsein- und - ausgang in einem Arm des "T" untergebracht sind.

In bevorzugter Ausgestaltung der Erfindung sind somit der Strömungseingang und der Strömungsausgang in Gegenstromführung zueinander in dem Bypass geführt und vorzugsweise durch eine Zwischenwand voneinander getrennt. Eine derartig kompakte Bauweise bringt einen geringeren Bauraumbedarf mit sich und führt zudem zu weniger thermischen Verlusten, da der einströmende Abgasstrom durch den ausströmenden Strom erwärmt wird.

Ferner ist bevorzugt, dass die Ventileinheit als Klappenventil ausgebildet ist. Klappenventile sind wenig störanfällige Ventile, welche in der Regel über zwei Positionen verfügen. Hierbei sind zwei Verschlussabschnitte, zum Verschließen der jeweiligen Position, einer Ventileinheit stoffschlüssig miteinander verbunden und bilden die sogenannte Klappe. Durch Bewegen der Klappe können die Verschlussteile in eine andere Position überführt werden. Üblicherweise weist das Klappenventil zwei Positionen auf, in welcher zumindest ein Durchgang abwechselnd geöffnet und verschlossen ist.

Insbesondere bevorzugt ist, dass die Ventileinheit zwei drehbar gelagerte Verschlussabschnitte umfasst, wobei ein erster Verschlussabschnitt in der zweiten Position der Ventileinheit den Strömungseingang verschließt und ein zweiter Verschlussabschnitt in der zweiten Position den Strömungsausgang verschließt und einer der Verschlussabschnitte in der ersten Position den Abgaskanal verschließt.

In besonderer Ausgestaltung der Erfindung ist vorgesehen, dass die Verschlussabschnitte als Verschlussklappen ausgebildet sind, welche über ein drehbar gelagertes Verbindungselement miteinander verbunden sind. Diese besondere Ausgestaltung eines Klappenventiles ermöglicht vorteilhafterweise einen Materialmix der einzelnen Bauteile. Jedes der Bauteile wird vorzugsweise in Form und Material an die einzelnen Bedingungen angepasst. So wird bevorzugt ein Verschlussteil elastisch ausgeführt, um eine bessere Dichtung zu erzielen, während das Verbindungselement besonders starr und spröde ausgeführt wird. Darüber hinaus ermöglicht die modulare Bauweise der Ventileinheit die Nutzung von Synergieeffekten bei deren Herstellung.

Mit besonderem Vorteil ist zwischen den beiden Verschlussabschnitten eine Aufnahme für eine drehbare Lagerung, beispielsweise eine Achse angeordnet. Diese Achse kann stoffschlüssig, also beispielsweise mittels Schweißens, oder aber über ein geeignetes Befestigungselement mit dem Verbindungselement verbunden sein. Die Achse ist wiederum in einen Ventilschaft angeordnet, sodass eine Drehung eine Rotation des Achse und somit der Verschlussklappen ausführt. Über die Rotation der Achse in einem geeigneten Winkel werden die Verschlussklappen entweder in der ersten oder zweiten Position der Ventileinheit angeordnet.

Mit besonderem Vorteil ist die Bewegung der Achse steuerbar, insbesondere automatisiert steuerbar. Vorzugsweise ist die Achse somit mit einer Steuereinheit verbunden, wobei in diese Steuereinheit zusätzlich Informationen über Parameter des Abgasstroms, wie Drücke und Temperaturen eingelesen und bei Über- und/oder Unterschreiten von kritischen Werten zumindest ein Signal zum Einnehmen der ersten oder zweiten Position an die Ventileinheit übermittelt werden.

In weiterer bevorzugter Ausgestaltung der Erfindung ist vorgesehen, dass die Abgasbehandlungseinrichtung mit einem Bypass des Abgaskanals über ein Anschlussende des Bypasses und ein korrespondierendes Anschlussstück der Abgasbehandlungseinrichtung lösbar miteinander verbunden sind. Dies ermöglicht unter anderem eine leichte Wartung der Abgasbehandlungseinrichtung. Insbesondere kann die Abgasbehandlungseinrichtung mit minimalem Aufwand entfernt beziehungsweise gewechselt werden. Da die Verbindung zwischen Bypass und Abgasbehandlungseinrichtung nur über Anschlussende und Anschlussstück definiert wird, ist es zudem möglich, dass die Abgasbehandlungseinrichtung durch einen Katalysator oder aber auch einen Filter ersetzt wird, der ein zum Anschlussende des Bypasses korrespondierendes Anschlussstück aufweist. Somit kann der Katalysator beziehungsweise der Filter in Größe und Form, insbesondere Volumen, variieren und somit beispielsweise an die Abgasmassenströme verschiedener Verbrennungsmotoren angepasst werden.

Es ist bevorzugt, dass der den Strömungseingang und -ausgang beherbergende Bypass und ein die Ventileinheit beherbergender Abschnitt des Abgaskanals als einteiliges T-Verbindungsstück ausgebildet sind, welches lösbar mit dem Abgaskanal und/oder der Abgasbehandlungseinrichtung verbindbar ist. Die Ausbringung der Ventileinheit als einteiliges T-Stück ist eine besonders platzsparende Ausführungsform einer Ventileinheit für einen Bypass, welche zudem sowohl den Strömungsein- als auch Strömungsausgang aufweist. Insbesondere die lösbare Verbindung ermöglicht die Nachrüstung von bestehenden Abgassystemen mit der Abgasbehandlungseinrichtung in erfindungsgemäßer Anordnung.

Insbesondere bevorzugt ist, dass die Ventileinheit oder das diese beherbergende T-Verbindungsstück unmittelbar stromausgangsseitig an einen Abgaskrümmer des Abgaskanals anschließt. Die resultierende motornahe Anordnung bietet den Vorteil, dass der im Abgaskanal geführte Abgasstrom möglichst geringe thermische Verluste erfährt, bevor er in die Abgasbehandlungseinrichtung geführt wird. Dabei wird im Rahmen der vorliegenden Erfindung mit dem Begriff "motornah/brennkraftmaschinennah" ein Abstand zwischen Zylinderauslass des Verbrennungsmotors und Stirnfläche der Abgasbehandlungseinrichtung von höchstens 120 cm, insbesondere höchstens 100 cm, vorzugsweise höchstens 80 cm verstanden. In einer konkreten Ausführung beträgt der Abstand etwa 75 cm. Eine motornahe Anordnung bedeutet insbesondere, dass die Abgasbehandlungseinrichtung im Motorraum und/oder aufgenommen an der Brennkraftmaschine ("closed-coupled") angeordnet ist. Auf diese Weise kann die Abwärme der Brennkraftmaschine genutzt werden, um die Arbeitstemperaturen der Katalysatoren in der Abgasbehandlungseinrichtung zu erreichen.

Die sehr kompakte platzsparende Bauform der erfindungsgemäßen Abgasbehandlungseinrichtung ist besonders vorteilhaft für Ausführungsformen, in welcher die Abgasbehandlungseinrichtung stromauf einer Turbine eines Turboladers angeordnet ist. Der hohe Druck und die höhere Temperatur vor der Turbine des Turboladers ermöglichen einen kleiner dimensionierten Katalysator als bei herkömmlichen Abgassystemen, bei denen der Katalysator nach der Turbine des Turboladers angeordnet ist. Dies bringt wiederum einen Bauraum- und Materialvorteil mit sich.

Darüber hinaus oder des Weiteren kann die Abgasbehandlungseinrichtung in einer Bypassleitung einer Abgasanlage angeordnet sein oder kann die Brennkraftmaschine eine Bypassleitung zur Umgehung der Abgasbehandlungseinrichtung aufweisen. Insbesondere können die Zuleitung zur Abgasbehandlungseinrichtung und/oder die Ableitung von der Abgasbehandlungseinrichtung verschließbar sein. Alternativ oder ergänzend dazu kann die Bypassleitung verschließbar sein. Aufgrund der geringeren thermischen Masse, die der Abgasstrom bis zur Turbine passiert, sowie der Energie, die die Turbine dem Abgasstrom zum Antrieb des Verdichters entnimmt, sind die Abgastemperaturen vor der Turbine des Turboladers in Teillast typischerweise circa 100 K höher als nach der Turbine des Turboladers. Eine Anordnung mit einem verschließbaren Bypass beziehungsweise verschließbaren Zu- und Ableitungen bringt den Vorteil, dass die Abgasbehandlungseinrichtung im Bedarfsfall, beispielsweise bei zu hohen Abgastemperaturen, vom Abgas umgangen wird. Somit werden eine aufgrund zu hoher Abgastemperaturen einsetzende thermische Alterung des Katalysators in der Abgasbehandlungseinrichtung vermieden und sowohl Schädigungen der Beschichtung als auch zusätzliche Strömungsverluste bei hohen Massenströmungen reduziert.

Die Abgasbehandlungseinrichtung umfasst vorzugsweise wenigstens einen Katalysator in einer Baueinheit mit einer Seite, welche eine Zuleitungsöffnung für Abgas in die Baueinheit und eine Ableitungsöffnung für Abgas aus der Baueinheit aufweist. Der Katalysator umfasst ein monolithisches Substrat (einteiliges Substrat). Es sind eine erste Gruppe von Kanälen durch das Substrat in einer ersten Strömungsrichtung durchströmbar und eine zweite Gruppe von Kanälen durch das Substrat in einer zweiten, von der ersten verschiedenen Strömungsrichtung durchströmbar in der Baueinheit angeordnet.

Die erste Gruppe von Kanälen werden auch als erster Teil des Katalysators und die zweite Gruppe von Kanälen als zweiter Teil des Katalysators bezeichnet. In bestimmten Ausführungsformen kann es weitere Gruppen von Kanälen geben.

Die erste und die zweite Gruppe von Kanälen können dieselbe katalytische Beschichtung oder dieselben katalytischen Beschichtungen aufweisen. Alternativ dazu können die erste und die zweite Gruppe von Kanälen voneinander verschiedene katalytische Beschichtungen aufweisen. Darüber hinaus kann der Katalysator wenigstens abschnittsweise eine Filterfunktion haben. Insbesondere kann es sich um ein Wandstromsubstrat handeln.

Die zweite Strömungsrichtung ist bevorzugt antiparallel/entgegengesetzt zur ersten Strömungsrichtung. Die Baueinheit ist (bevorzugt lösbar) mit einer Abgasleitung verbindbar, so dass eine fluidische Verbindung der Zuleitungsöffnung und der Ableitungsöffnung mit der Abgasleitung herstellbar ist. Die Zuleitungsöffnung und die Ableitungsöffnung haben bevorzugt im Wesentlichen dieselbe Orientierung.

In vorteilhafter Weise gelangt ein kompakter monolithischer Katalysator zum Einsatz, um in der Baueinheit eine möglichst große Raumausnutzung, katalytisch wirksame Fläche bezogen auf das Volumen, zu erreichen. Die Baueinheit ist in hohem Maße baumraumsparend. Die Baueinheit ist auf einer Seite anschlussfähig für die Zuleitung und für die Ableitung von Abgas.

In bevorzugter Ausgestaltung der Erfindung liegt die erste Gruppe von Kanälen durch das Substrat stromaufwärts von der zweiten Gruppe von Kanälen durch das Substrat in der Abgasbehandlungseinrichtung. Mit anderen Worten, ein Abgasstrom durchfließt einen ersten Teil des Katalysators in einer ersten Richtung und einen zweiten Teil des Katalysators in einer zweiten Richtung. Die erste Gruppe und die zweite Gruppe können zusammen das gesamte Substrat bilden.

Zur einfachen und möglichst gegendruckminimierenden Abgasströmungsleitung ist vorteilhafterweise in bevorzugten Ausführungsformen vorgesehen, dass in der Baueinheit ein Abgaszuleitkanal von der Zuleitungsöffnung zur ersten Gruppe von Kanälen durch das Substrat führt und/oder ein Abgasableitkanal von der zweiten Gruppe von Kanälen durch das Substrat zur Ableitungsöffnung führt.

Des Weiteren oder alternativ dazu kann die Baueinheit der Abgasbehandlungseinrichtung eine Umlenkungsvorrichtung zur Veränderung der Strömungsrichtung des die Baueinheit durchströmenden Abgases aufweisen, wobei die Umlenkungsvorrichtung stromab der ersten Gruppe von Kanälen des Katalysators und stromauf der zweiten Gruppe von Kanälen des Katalysators angeordnet ist. Eine Innenfläche einer Gehäusewand kann insbesondere die Umlenkungsvorrichtung bilden oder Teil der Umlenkungsvorrichtung sein.

Das monolithische Substrat des Katalysators kann in konkreten Ausführungsformen, insbesondere auf zwei Arten, in Gruppen eingeteilt sein: Zum einen können die erste Gruppe von Kanälen des Katalysators und die zweite Gruppe von Kanälen des Katalysators derart zueinander liegen, dass die eine der Gruppen des Katalysators der anderen der Gruppen des Katalysators konzentrisch umgibt. Zum anderen können die erste Gruppe von Kanälen des Katalysators und die zweiten Gruppe von Kanälen des Katalysators zueinander spiegelsymmetrisch in Bezug auf eine das Bauteil schneidende Ebene liegen.
In besonders bevorzugter Ausgestaltung der Erfindung umfasst der Katalysator einen Drei-Wege-Katalysator zur Umsetzung von Kohlenwasserstoffen (HC), Kohlenmonoxid (CO) und Stickoxiden (NOₓ), insbesondere bevorzugt ist er als Kombination eines Drei-Wege-Katalysators und eines Partikelfilters ausgeführt, sodass alle relevanten Schadstoffe möglichst aufbereitet werden, bevor sie in die Turbine des Turboladers gelangen. Letztere Ausführung wird auch als Vier-Wege-Katalysator bezeichnet. Bevorzugt ist der Katalysator ausgebildet, die Stickoxide zu reduzieren und/oder zu speichern. Die Speicherfunktion stellt sicher, dass dem Abgasstrom auch bei niedrigen Abgastemperaturen, beispielsweise beim Kaltstart, die Stickoxide entzogen werden. Auf diese Weise können innermotorische Maßnahmen zur Senkung der NOₓ-Rohemission nach einem Kaltstart, wie zum Beispiel Voreinspritzung, Spätverschiebung der Verbrennungsschwerpunktlagen, hohe AGR-Raten, Reduzierung der Zylinderfüllung, vermieden werden. In der Folge werden der Wirkungsgrad verbessert, der Verbrauch gesenkt sowie die Emission von unverbrannten Kohlenwasserstoffen verringert.

Ferner ist bevorzugt, dass stromab, also hinter der Turbine, weitere Katalysatoren und/oder Filter angeordnet sind. Dies bringt den Vorteil, dass bei einer Umgehung des erfindungsgemäßen Katalysators, also bei geschlossenem Strömungsein- und Strömungsausgang, der Abgasstrom dennoch aufbereitet wird. Stromab der Turbine sind vorzugsweise Oxidationskatalysatoren und/oder Partikelfilter angeordnet.

In weiterer bevorzugter Ausgestaltung der Erfindung ist der Verbrennungsmotor ein Dieselmotor.

Ein weiterer Aspekt der Erfindung betrifft ein Kraftfahrzeug aufweisend ein Abgassystem nach einem der vorhergehenden Ansprüche.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1A: eine schematische Darstellung eines erfindungsgemäßen Abgassystems,
- Figur 1B: eine schematische Darstellung eines erfindungsgemäßen Abgassystems in einer bevorzugten Ausführungsform,
- Figur 2: eine schematische Darstellung einer Abgasbehandlungseinrichtung in einem erfindungsgemäßen Abgassystem, und
- Figur 3: eine Detaildarstellung der Ventileinheit in einem erfindungsgemäßen Abgassystem, und
- Figur 4: eine Detaildarstellung einer bevorzugten Ausführungsform der erfindungsgemäßen Abgasbehandlungseinrichtung.

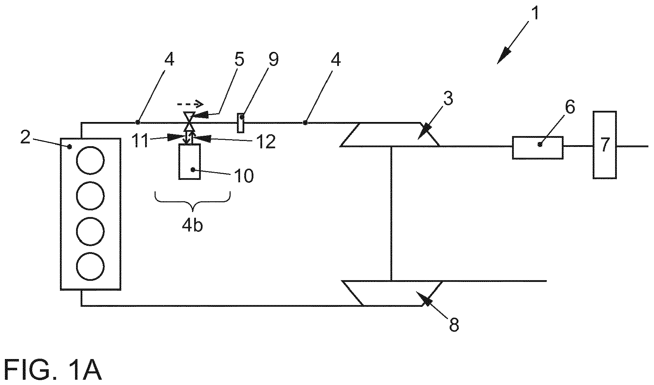

Figur 1A zeigt ein erfindungsgemäßes Abgassystem 1 eines Verbrennungsmotors 2. In dargestellter Ausführungsform ist der Verbrennungsmotor 2 als Dieselmotor ausgebildet. Der Verbrennungsmotor 2 ist über einen Abgaskanal 4 mit einer Turbine 3 verbunden, welcher einen Kompressor 8 eines Turboladers antreibt. Stromauf der Turbine 3 ist eine Ventileinheit 5 innerhalb des Abgaskanals 4 angeordnet. Die Ventileinheit 5 weist einen Strömungseingang 11 und einen Strömungsausgang 12 auf, welche jeweils fluidführend mit einer Abgasbehandlungseinrichtung 10 verbunden ist. Der Katalysator 10 ist parallel zum Abgaskanal 4, in einem Bypass 4b, angeordnet.

Stromauf der Turbine 3 sind Sensoren 9 zur Messung von Temperatur und/oder Druck des Abgasstroms angeordnet. In dargestellter Ausführungsform erfolgt die Anordnung der Sensoren stromab der Ventileinheit 5.

Stromab der Turbine 3, insbesondere an einer Unterbodenposition eines von dem Verbrennungsmotor 2 angetriebenen Kraftfahrzeugs, können weitere Katalysatoren 6 und/oder Filter 7 angeordnet sein. In gezeigter Ausführungsform sind im Abgaskanal 4 hinter der Turbine 3 ein Diesel-Oxidations-Katalysator 6 sowie ein Partikelfilter 7 angeordnet.

Im Verbrennungsmotor 2 werden durch Verbrennung des Kraftstoffs schadstoffbelastete Abgase erzeugt. Diese Abgase gelangen über einen Krümmer 4a in den Abgaskanal 4. Die im Abgaskanal 4 angeordnete Ventileinheit 5 stellt eine Abzweigung für den im Abgaskanal 4 geförderten Abgasstrom dar. Je nach Position der Ventileinheit 5 wird der Abgasstrom entweder über den Strömungseingang 11 in den Katalysator 10 geleitet und von dort aus über den Strömungsausgang 12 über die Ventileinheit 5 wieder in den Abgaskanal 4, oder aber gelangt unter Umgehung der Abgasbehandlungseinrichtung 10 direkt durch die Ventileinheit 5 hindurch zur Turbine 3. Wird der Abgasstrom durch den Katalysator 10 geführt, werden, je nach Ausgestaltung des Katalysators 10, Schadstoffe wie Stickoxide, Kohlenmonoxid sowie Partikel aus dem Abgasstrom entfernt.

Die Einstellung der Positionen der Ventileinheit 5 kann beispielsweise in Abhängigkeit von Sensoren im Abgasstrom erfolgen. Stehen die Sensoren 9 mit einer Steuereinheit in Verbindung, welche darüber hinaus mit der Ventileinheit 5 in Verbindung steht, so können in Abhängigkeit von den gemessenen Eigenschaften des Abgasstroms die Positionen innerhalb der Ventileinheit 5 gesteuert werden.

Stromab der Ventileinheit 5 trifft der Abgasstrom auf die Turbine 3 und treibt diese an. Da die Turbine 3 mit einem Kompressor 8 des Turboladers verbunden ist, kann dieser Frischluft ansaugen und verdichten, welche dann dem Verbrennungsmotor 2 zugeführt wird. Ausgehend von der Turbine 3 wird der Abgasstrom weiter über den Abgaskanal 4 hin zu einer nicht dargestellten Abgasklappe geführt. Dabei kann der Abgasstrom weitere Katalysatoren, wie beispielsweise einen Diesel-Oxidations-Katalysator 6 und/oder Partikelfilter 7, passieren. Die Katalysatoren 6 und/oder Filter 7 dienen insbesondere dazu, Schadstoffe, welche sich im Abgasstrom befinden und nicht bereits über die Abgasbehandlungseinrichtung 10 umgesetzt wurden, aus dem Abgasstrom zu entfernen. Darüber hinaus haben die nachgeschalteten Katalysatoren 6 und/oder Filter 7 die Funktion der Erstbehandlung des Abgasstromes, falls die vorgeschaltete Abgasbehandlungseinrichtung 10 umgangen wurde. Dies kann zum Beispiel dann der Fall sein, wenn die Temperatur des Abgases einen kritischen Wert überschritten hat, bei dem die Gefahr besteht, dass eine innerhalb der Abgasbehandlungseinrichtung 10 angeordnete katalytische Beschichtung beschädigt oder zerstört wird.

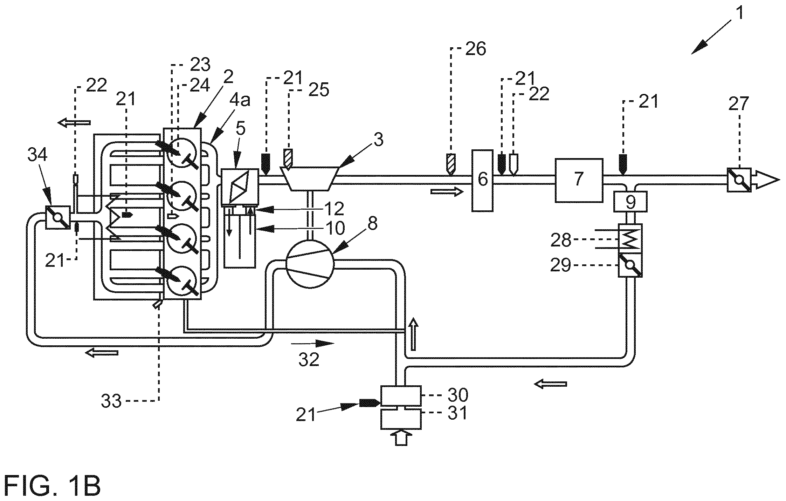

Figur 1B zeigt das erfindungsgemäße Abgassystem 1 in einer bevorzugten Ausführungsform. Im Wesentlichen entsprechen Aufbau und Funktionsweise denen in Figur 1 gezeigten. Das in Figur 1B gezeigte Abgassystem 1 zeigt darüber hinaus weitere Bestandteile des Abgassystems 1, wie beispielsweise Temperatur- 21 und Drucksensoren 22 und deren bevorzugte Anordnung im Abgassystem 1, sowie mögliche zusätzliche Strömungswege, wie die Luftzufuhr oder einen Blow-by 32. Weiterhin gezeigt sind die durch Pfeile dargestellten Strömungswege des Abgases und der Zuluft. Einzelne Komponenten sind der Bezugszeichenliste zu entnehmen.

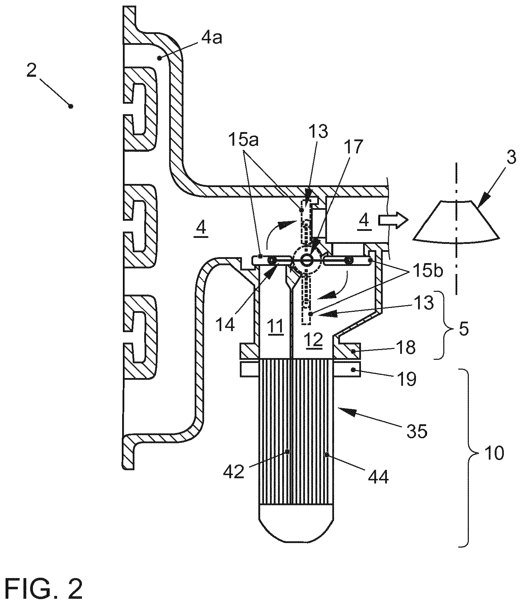

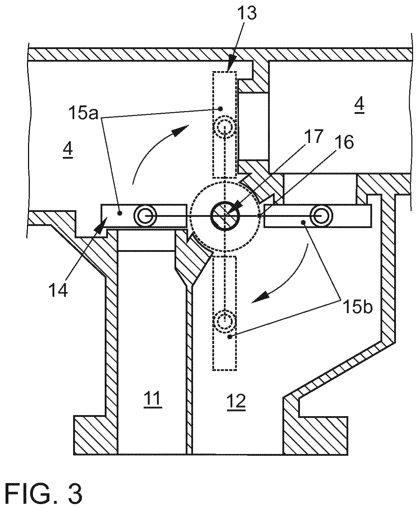

Figur 2 zeigt eine Detailansicht der Anordnung der Ventileinheit 5 und der Abgasbehandlungseinrichtung 10 in dem erfindungsgemäßen Abgassystem 1. Zusätzlich zeigt Figur 3 die Ventileinheit 5 in einer weiter vergrößerten Darstellung.

Gezeigt ist der Krümmer 4a als Ausgang des Verbrennungsmotors 2, in dessen unmittelbarer Nähe die Ventileinheit 5 im Abgasstrom 4 angeordnet ist.

Die Ventileinheit 5 verfügt über zwei Verschlussteile 15a, 15b , welche über ein Verbindungselement 16 starr miteinander verbunden sind. Ferner beherbergt die Ventileinheit 5 einen Strömungseingang 11 und einen Strömungsausgang 12. Die Ventileinheit 5 kann mindestens zwei Positionen einnehmen, wobei in einer ersten Position 13 einer der Verschlussabschnitte 15a oder 15b den Abgaskanal verschließt und ein erster Verschlussabschnitt 15a in einer zweiten Position 14 den Strömungseingang 11 verschließt und ein zweiter Verschlussabschnitt 15b den Strömungsausgang 12 verschließt.

Verschlussteile 15a und 15b und Verbindungselement 16 können dabei aus unterschiedlichen oder aber auch aus gleichen Materialien gefertigt sein. Die beiden Verschlussteile 15a, 15b der Ventileinheit 5 können in Form, Größe und Material identisch ausgeführt sein, können sich jedoch auch voneinander unterscheiden. Beispielsweise kann es bevorzugt sein, das erste Verschlussteil 15a, welches den Strömungseingang 11 verschließt, größer, insbesondere länger auszuführen als das zweite Verschlussteil 15b, welches in der zweiten Position 14 den Strömungsausgang 12 verschließt. Dies ist insbesondere dann von Vorteil, wenn Strömungseingang 11 und Strömungsausgang 12 nicht symmetrisch beziehungsweise baugleich ausgeführt sind. Bevorzugt ist jedoch, dass das Verschlussteil 15 aus einem dichtenden Material, einem weichen Metall, gefertigt ist, während das Verbindungselement 16 starr ist und insbesondere spröde Eigenschaften hat und beispielsweise aus einem Stahl gefertigt ist. Das Verbindungselement 16 ist zwischen den Verschlussteilen 15 mit einer Achse 17 verbunden. Die Achse 17 ist drehbar innerhalb des Ventilschaftes gelagert. Achse 17 und Verbindungselement 16 stehen dabei lotrecht zueinander.

Die Ventileinheit 5 weist weiterhin über einen Strömungseingang 11 und einen Strömungsausgang 12. Eine Rotation der Achse 17 führt somit zu einer Verlagerung der Position der Verschlussteile 15a, 15b. In dargestellter Ausführungsform führt eine Rotation der Achse 17 um 90° im mathematisch negativen Drehsinn von der zweiten Position 14 der Ventileinheit 5, in welcher Strömungseingang 11 und Strömungsausgang 12 durch die Verschlussteile 15a, 15b verschlossen sind, zu der ersten Position 13, in welcher das erste Verschlussteil 15a, welches zuvor den Strömungseingang 11 verschloss, den Abgaskanal 4 verschließt. Wird die Achse 17 erneut um 90° im mathematisch positivem Drehsinn gedreht, werden die Verschlussteile 15a, 15b erneut verlagert, sodass sie dann den Abgaskanal 4 freigeben und Abgas vom Verbrennungsmotor durch die Ventileinheit 5 direkt zur Turbine fließen kann und gleichzeitig Strömungseingang 11 und Strömungsausgang 12 verschlossen und somit für den Abgasstrom blockiert sind. Je nach Ausgestaltung des Abgaskanals 4 und der Anordnung von Strömungseingang 11 und Strömungsausgang 12 können die von den Verschlussteilen 15a, 15b beschriebenen Kreissegmente auch andere Winkel im Bereich von 1° bis 180° beschreiben. Die Achse 17 kann mit einer nicht dargestellten Steuereinheit verbunden sein. Diese Steuereinheit kann weiter mit Temperatur- und/oder Drucksensoren 9 zur Bestimmung der Abgastemperatur beziehungsweise des Abgasdrucks verbunden sein. Weist der Abgasstrom Temperaturen unterhalb der kritischen Temperatur von ca. 700°C auf, wird über die Steuereinheit die erste Position 13 gewählt. Überschreitet die Temperatur des Abgasstroms jedoch die kritische Temperatur, so erfolgt eine Signalgebung an die Achse 17, welche infolgedessen um den erforderlichen Winkel, hier 90°, gedreht wird, und die Verschlussteile 15a, 15b in die zweite Position 14 überführt.

Der Ventilschaft ist an einem Punkt angeordnet, in dem Abgaskanal 4, Strömungseingang 11 und Strömungsausgang 12 zusammengeführt werden. Strömungseingang 11 und Strömungsausgang 12 sind parallel zueinander benachbart angeordnet und über eine Zwischenwand voneinander getrennt. Diese Trennung unterbindet einen Austausch des Fluides. Strömungseingang 11 und Strömungsausgang 12 sind an zwei gegenüberliegenden Seiten offen ausgeführt, wobei eine Öffnung eine fluidführende Verbindung mit dem Abgaskanal 4 darstellt und die andere Öffnung eine fluidführende Verbindung zur Abgasbehandlungseinrichtung 10 ist. An dem Ende, an welchem Strömungseingang 11 und Strömungsausgang 12 mit der Abgasbehandlungseinrichtung 10 verbunden sind, weist die Ventileinheit 5 weiter ein Anschlussende 18 auf. Das Anschlussende 18 kann, beispielsweise als Teil eines Flansches oder als Gewinde, als Teil einer Rast-Steck-Verbindung und/oder Bajonettverbindung ausgebildet sein. Ein korrespondierendes Anschlussstück 19 zu dem Anschlussende 18 der Ventileinheit 5 ist an der Abgasbehandlungseinrichtung 10 (genauer gesagt eines Gehäuses desselben) angeordnet. Anschlussende 18 der Ventileinheit 5 und Anschlussstück 19 der Abgasbehandlungseinrichtung 10 bilden gemeinsam eine fluidführende, nach außen dichtende Verbindung. Diese Verbindung kann beispielsweise in Form eines Flansches, einer Dreh- und/oder Steckverbindung, wie beispielsweise einer Bajonettverbindung, oder einem Gewinde ausgeführt sein. Das Anschlussstück 19 ist, bevorzugt stoffschlüssig, mit der erfindungsgemäßen Abgasbehandlungseinrichtung 10 verbunden.

Die erfindungsgemäßen Abgasbehandlungseinrichtung 10 weist zumindest einen Katalysator 35 mit einer katalytischen Beschichtung und/oder einer Partikelfilterfunktion auf. Der Katalysator 35 wird in Hinrichtung durch eine erste Gruppe 42 von Kanälen und in der Rückrichtung durch eine zweite Gruppe 44 von Kanälen durchströmt.

Bei Partikelfiltern sind die Strömungskanäle des Katalysatorträgers wechselseitig ein- oder ausgangsseitig geschlossen, sodass das Abgas durch die Wandungen der Kanäle treten muss und die Partikel zurückgehalten werden. Zudem sind im Falle katalytischer Partikelfilter die Wandungen mit einer katalytischen Beschichtung versehen, um die verschiedenen Umsetzungsreaktionen zu katalysieren. In Abhängigkeit von den Anforderungen und den zu katalysierenden Reaktionen, welche innerhalb des Katalysators zur Aufbereitung des Abgases ablaufen, weist der Katalysator unterschiedliche katalytische Beschichtungen auf.

Der vom Verbrennungsmotor 2 erzeugte Abgasstrom gelangt über den Abgaskanal 4 zur Ventileinheit 5. Befinden sich die Verschlussteile 15a, 15b der Verbindungseinheit 5 in der ersten Position 13, so wird der Abgasstrom, wenn er auf das erste Verschlussteil 15a trifft, abgeleitet und in den geöffneten Strömungseingang 11 geführt. Von dort aus gelangt er in den Katalysator 10, wo es, je nach Auslegung des Katalysators 10, zu chemischen Reaktionen der Stickoxide und Kohlenmonoxidanteile im Abgas und/oder zu einer Adsorption von Partikeln und Schwebteilen aus dem Abgas kommt. Nach einer Strömungsumkehr gelangt der nunmehr gereinigte Abgasstrom in den Strömungsausgang 12 der Verbindungseinheit 5 und von dort aus in den Abgaskanal 4.

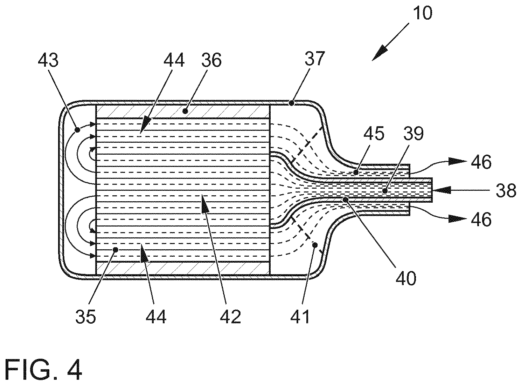

Die Figur 4 zeigt detailliert eine Schnittdarstellung einer besonders bevorzugten Ausführungsform der erfindungsgemäßen Abgasbehandlungseinrichtung 10. Während in der Figur 1 eine Ausführungsform eines Katalysators der Abgasbehandlungseinrichtung 10 gezeigt wird, welcher auf einer Seite in einer Hinrichtung und auf einer zweiten Seite in einer Rückrichtung durchströmt wird, erfolgt in der Ausführungsform der Figur 4 eine Durchströmung in einem inneren Bereich um die Hauptachse des Katalysators in Hinrichtung und in einem äußeren Bereich, der konzentrisch um den inneren Bereich angeordnet ist, in Rückrichtung. Der monolithische oder einteilige Katalysator 35 ist in üblicher Weise, insbesondere ebenso wie in der Ausführungsform der Figur 1, getragen von einer Fasermatte 36 in einem Gehäuse 37 aufgenommen. Auf diese Weise ist eine Baueinheit gebildet. Der Katalysator 35 umfasst ein monolithisches Substrat. Das Abgas tritt entlang der Hauptachse durch die Zuleitungsöffnung 38 in den Abgaszuleitkanal 39 der Abgasbehandlungseinrichtung 10 ein. Der Abgaszuleitkanal 39 ist vom Abgasableitkanal 45 durch eine Trennwand 40 separiert. Die Trennwand 40 ist mittels einer Abstützung 41 am Gehäuse 37 gelagert oder aufgenommen. Die Trennwand 40 endet direkt am Katalysator 35 und liegt fluiddicht an dessen Stirnseite an. Dabei werden die Kanäle durch den Katalysator 35 in eine innenliegende erste Gruppe 42 und eine außenliegende zweite Gruppe 44 aufgeteilt. Das Abgas durchströmt den Katalysator 35 in Hinrichtung durch die Kanäle der ersten Gruppe 42. Es gelangt in einen Umlenkraum 43. Die Wand der Gehäuses im Umlenkraum 43 bildet eine Umlenkungsvorrichtung für das Abgas, so dass dessen Strömungsrichtung geändert wird. Vom Umlenkraum 43 ausgehend durchströmt das Abgas den Katalysator im Wesentlichen antiparallel/entgegengesetzt in Rückrichtung durch die Kanäle der zweiten Gruppe 44. Das Abgas gelangt in den Abgasableitkanal 45, welcher konzentrisch den Abgaszuleitkanal 39 umschließt und tritt durch die Ableitungsöffnung 46 aus der Abgasbehandlungseinrichtung 10 aus. Die Baueinheit weist auf einer Seite die Zuleitungsöffnung 38 und die Ableitungsöffnung 46 auf.

### Bezugszeichenliste

- 1: Abgassystem
- 2: Verbrennungsmotor
- 3: Turbine eines Turboladers
- 4: Abgaskanal
- 4a: Abgaskrümmer
- 4b: Bypass
- 5: Ventileinheit
- 6: Dieseloxidationsfilter
- 7: Partikelfilter
- 8: Kompressor
- 9: Sensor
- 10: Abgasbehandlungseinrichtung/ Katalysator
- 11: Strömungseingang
- 12: Strömungsausgang
- 13: erste Position
- 14: zweite Position
- 15a: erster Verschlussabschnitt/ erstes Verschlussteil
- 15b: zweiter Verschlussabschnitt/ zweites Verschlussteil
- 16: Verbindungselement
- 17: Achse
- 18: Anschlussende
- 19: Anschlussstück
- 20: Ladeluftkühler
- 21: Temperatursensor
- 22: Drucksensor
- 23: Nockenwellensensor
- 24: Common-rail-Injektoren
- 25: VTG-Wegsensor
- 26: Lambdasonde
- 27: Abgasklappe
- 28: Kühlung für Niederdruck-Abgasrückführung (AGR)
- 29: Niederdruck-AGR-Ventil
- 30: Heißfilm-Anemometer
- 31: Luftfilter
- 32: Blow-by
- 33: Kurbelwellensensor
- 34: Regelklappe
- 35: Katalysator
- 36: Fasermatte
- 37: Gehäuse
- 38: Zuleitungsöffnung
- 39: Abgaszuleitkanal
- 40: Trennwand
- 41: Abstützung
- 42: erste Gruppe
- 43: Umlenkraum
- 44: zweite Gruppe
- 45: Abgasableitkanal
- 46: Ableitungsöffnung

## Patentansprüche

1. Abgassystem (1) für ein Kraftfahrzeug umfassend:
- einen einen Abgasstrom erzeugenden Verbrennungsmotor (2),
- einen den Abgasstrom führenden Abgaskanal (4),
- eine Turbine (3) als Teil eines Turboladers, die in dem Abgaskanal (4) angeordnet ist,
- eine Abgasbehandlungseinrichtung (10), die in einem Bypass (4b) des Abgaskanals (4) stromauf der Turbine (3) angeordnet ist, sowie
- eine Ventileinheit (5), die an einer Abzweigungsstelle des Bypasses (4b) im Abgaskanal (4) angeordnet ist,
**dadurch gekennzeichnet, dass** die Abgasbehandlungseinrichtung (10) über einen Strömungseingang (11) und einen Strömungsausgang (12) des Bypasses (4b) fluidführend mit dem Abgaskanal (4) verbunden ist, wobei in einer ersten Position (13) der Ventileinheit (5) der Abgaskanal (4) verschlossen und der Strömungsein- (11) und -ausgang (12) geöffnet sind und in einer zweiten Position (14) der Ventileinheit (5) der Abgaskanal (14) geöffnet und der Strömungsein- (11) und -ausgang (12) verschlossen sind.

2. Abgassystem (1) nach Anspruch 1, **dadurch gekennzeichnet, dass** der Strömungseingang (11) und der Strömungsausgang (12) in Gegenstromführung zueinander in dem Bypass (4b) geführt sind und vorzugsweise durch eine Zwischenwand voneinander getrennt sind.

3. Abgassystem (1) nach Anspruch 1 oder 2, **dadurch gekennzeichnet, dass** die Ventileinheit (5) zwei drehbar gelagerte Verschlussabschnitte (15a, 15b) umfasst, wobei ein erster Verschlussabschnitt (15a) in der zweiten Position (14) der Ventileinheit (5) den Strömungseingang (11) verschließt und ein zweiter Verschlussabschnitt (15b) in der zweiten Position (14) den Strömungsausgang (12) verschließt und einer der Verschlussabschnitte (15a, 15b) in der ersten Position (13) den Abgaskanal (4) verschließt.

4. Abgassystem (1) nach Anspruch 3, **dadurch gekennzeichnet, dass** die Verschlussabschnitte (15a, 15b) als Verschlussklappen ausgebildet sind, welche über ein drehbar gelagertes Verbindungselement (16) miteinander verbunden sind.

5. Abgassystem (1) nach einem der vorhergehenden Ansprüche, **dadurch gekennzeichnet, dass** die Abgasbehandlungseinrichtung (10) mit dem Bypass (4b) des Abgaskanals (4) über ein Anschlussende (18) des Bypasses (4b) und ein korrespondierendes Anschlussstück (19) der Abgasbehandlungseinrichtung (10) lösbar miteinander verbunden sind.

6. Abgassystem (1) nach einem der vorhergehenden Ansprüche, **dadurch gekennzeichnet, dass** der den Strömungseingang und -ausgang (11, 12) beherbergende Bypass (4b) und ein die Ventileinheit (5) beherbergender Abschnitt des Abgaskanals (4) als einteiliges T-Verbindungsstück ausgebildet sind, welches lösbar mit dem Abgaskanal (4) verbindbar ist.

7. Abgassystem (1) nach einem der vorhergehenden Ansprüche, **dadurch gekennzeichnet, dass** die Ventileinheit (5) oder das diese beherbergende T-Verbindungsstück unmittelbar stromausgangsseitig an einen Abgaskrümmer (4a) des Abgaskanals (4) anschließt.

8. Abgassystem (1) nach einem der vorhergehenden Ansprüche, **dadurch gekennzeichnet, dass** die Abgasbehandlungseinrichtung (10) wenigstens einen Katalysator (35) in einer Baueinheit mit einer Seite, welche eine Zuleitungsöffnung (38) für Abgas in die Baueinheit und eine Ableitungsöffnung (46) für Abgas aus der Baueinheit aufweist, und der Katalysator (38) ein monolithisches Substrat umfasst und eine erste Gruppe (42) von Kanälen durch das Substrat in einer ersten Strömungsrichtung durchströmbar und eine zweite Gruppe (44) von Kanälen durch das Substrat in einer zweiten, von der ersten verschiedenen Strömungsrichtung durchströmbar in der Baueinheit angeordnet ist.

9. Abgassystem (1) nach Anspruch 8, **dadurch gekennzeichnet, dass** die erste Gruppe (42) von Kanälen durch das Substrat stromaufwärts von der zweiten Gruppe (44) von Kanälen durch das Substrat liegt.

10. Abgassystem (1) nach einem der Ansprüche 8 und 9, **dadurch gekennzeichnet, dass** in der Baueinheit ein Abgaszuleitkanal (39) von der Zuleitungsöffnung (38) zur ersten Gruppe (42) von Kanälen durch das Substrat führt und/oder ein Abgasableitkanal (45) von der zweiten Gruppe (42) von Kanälen durch das Substrat zur Ableitungsöffnung (46) führt.

11. Abgassystem (1) nach einem der Ansprüche 8 bis 10, **dadurch gekennzeichnet, dass** die Baueinheit eine Umlenkungsvorrichtung zur Veränderung der Strömungsrichtung des die Baueinheit durchströmenden Abgases aufweist, wobei die Umlenkungsvorrichtung stromab der ersten Gruppe (42) von Kanälen des Katalysators (35) und stromauf der zweiten Gruppe (44) von Kanälen des Katalysators (35) angeordnet ist.

12. Abgassystem (1) nach einem der Ansprüche 8 bis 11, **dadurch gekennzeichnet, dass** die erste Gruppe (42) von Kanälen des Katalysators (35) und die zweite Gruppe (44) von Kanälen des Katalysators (35) derart zueinander liegen, dass die eine der Gruppen (42,44) des Katalysators (35) der anderen der Gruppen (42,44) des Katalysators (35) konzentrisch umgibt.

13. Abgassystem (1) nach einem der vorhergehenden Ansprüche, **dadurch gekennzeichnet, dass** stromab der Turbine (3) weitere Katalysatoren (6) und/oder Filter (7) angeordnet sind.

14. Abgassystem (1) nach einem der vorhergehenden Ansprüche, **dadurch gekennzeichnet, dass** der Verbrennungsmotor (2) ein Dieselmotor ist.

15. Kraftfahrzeug aufweisend ein Abgassystem (1) nach einem der vorhergehenden Ansprüche.

## Claims

1. Exhaust system (1) for a motor vehicle, comprising:
- an internal combustion engine (2) that produces an exhaust-gas flow,
- an exhaust duct (4) that conducts the exhaust-gas flow,
- a turbine (3) as part of a turbocharger, which turbine is arranged in the exhaust duct (4),
- an exhaust-gas treatment device (10) which is arranged in a bypass (4b) of the exhaust duct (4) upstream of the turbine (3), and
- a valve unit (5) which is arranged at a branching point of the bypass (4b) in the exhaust duct (4),
**characterized in that** the exhaust-gas treatment device (10) is connected in fluid-conducting fashion via a flow inlet (11) and a flow outlet (12) of the bypass (4b) to the exhaust duct (4), wherein, in a first position (13) of the valve unit (5), the exhaust duct (4) is closed and the flow inlet (11) and outlet (12) are open and, in a second position (14) of the valve unit (5), the exhaust duct (14) is open and the flow inlet (11) and outlet (12) are closed.

2. Exhaust system (1) according to Claim 1, **characterized in that** the flow inlet (11) and the flow outlet (12) are conducted in an opposing-flow configuration with respect to one another in the bypass (4b) and are preferably separated from one another by an intermediate wall.

3. Exhaust system (1) according to Claim 1 or 2, **characterized in that** the valve unit (5) comprises two rotatably mounted closure sections (15a, 15b), wherein a first closure section (15a), in the second position (14) of the valve unit (5), closes the flow inlet (11) and a second closure section (15b), in the second position (14), closes the flow outlet (12), and one of the closure sections (15a, 15b), in the first position (13), closes the exhaust duct (4).

4. Exhaust system (1) according to Claim 3, **characterized in that** the closure sections (15a, 15b) are formed as closure flaps which are connected to one another by means of a rotatably mounted connecting element (16).

5. Exhaust system (1) according to one of the preceding claims, **characterized in that** the exhaust-gas treatment device (10) and the bypass (4b) of the exhaust duct (4) are detachably connected to one another by means of a connection end (18) of the bypass (4b) and a corresponding connection piece (19) of the exhaust-gas treatment device (10).

6. Exhaust system (1) according to one of the preceding claims, **characterized in that** the bypass (4b), which accommodates the flow inlet and outlet (11, 12), and a section, which accommodates the valve unit (5), of the exhaust duct (4) are formed as a unipartite T-shaped connecting piece which is detachably connectable to the exhaust duct (4).

7. Exhaust system (1) according to one of the preceding claims, **characterized in that** the valve unit (5) or the T-shaped connecting piece that accommodates said valve unit directly adjoins, at a flow outlet side, an exhaust manifold (4a) of the exhaust duct (4).

8. Exhaust system (1) according to one of the preceding claims, **characterized in that** the exhaust-gas treatment device (10) has at least one catalytic converter (35) in a structural unit with a side which has a feed opening (38) for exhaust gas into the structural unit and a discharge opening (46) for exhaust gas out of the structural unit, and the catalytic converter (38) comprises a monolithic substrate, and, in the structural unit, there are arranged a first group (42) of ducts through the substrate which can be flowed through in a first flow direction and a second group (44) of ducts through the substrate which can be flowed through in a second flow direction that differs from the first.

9. Exhaust system (1) according to Claim 8, **characterized in that** the first group (42) of ducts through the substrate is situated upstream of the second group (44) of ducts through the substrate.

10. Exhaust system (1) according to either of Claims 8 and 9, **characterized in that**, in the structural unit, an exhaust-gas feed duct (39) leads from the feed opening (38) to the first group (42) of ducts through the substrate and/or an exhaust-gas discharge duct (45) leads from the second group (42) of ducts through the substrate to the discharge opening (46).

11. Exhaust system (1) according to one of Claims 8 to 10, **characterized in that** the structural unit has a diverting device for changing the flow direction of the exhaust gas flowing through the structural unit, wherein the diverting device is arranged downstream of the first group (42) of ducts of the catalytic converter (35) and upstream of the second group (44) of ducts of the catalytic converter (35).

12. Exhaust system (1) according to one of Claims 8 to 11, **characterized in that** the first group (42) of ducts of the catalytic converter (35) and the second group (44) of ducts of the catalytic converter (35) are situated relative to one another such that one of the groups (42, 44) of the catalytic converter (35) concentrically surrounds the other of the groups (42, 44) of the catalytic converter (35).

13. Exhaust system (1) according to one of the preceding claims, **characterized in that** further catalytic converters (6) and/or filters (7) are arranged downstream of the turbine (3).

14. Exhaust system (1) according to one of the preceding claims, **characterized in that** the internal combustion engine (2) is a diesel engine.

15. Motor vehicle having an exhaust system (1) according to one of the preceding claims.

## Revendications

1. Système de gaz d'échappement (1) pour un véhicule automobile, comprenant :
- un moteur à combustion interne (2) produisant un flux de gaz d'échappement,
- un conduit de gaz d'échappement (4) conduisant le flux de gaz d'échappement,
- une turbine (3) faisant partie d'un turbocompresseur, qui est disposée dans le conduit de gaz d'échappement (4),
- un dispositif de traitement des gaz d'échappement (10) qui est disposé dans une dérivation (4b) du conduit de gaz d'échappement (4) en amont de la turbine (3), et
- une unité de soupape (5) qui est disposée au niveau d'un point de branchement de la dérivation (4b) dans le conduit de gaz d'échappement (4),
**caractérisé en ce que** le dispositif de traitement de gaz d'échappement (10) est connecté fluidiquement au conduit de gaz d'échappement (4) par le biais d'une entrée d'écoulement (11) et d'une sortie d'écoulement (12) de la dérivation (4b), dans une première position (13) de l'unité de soupape (5), le conduit de gaz d'échappement (4) étant fermé et l'entrée (11) et la sortie (12) d'écoulement étant ouvertes, et dans une deuxième position (14) de l'unité de soupape (5), le conduit de gaz d'échappement (14) étant ouvert et l'entrée (11) et la sortie (12) d'écoulement étant fermées.

2. Système de gaz d'échappement (1) selon la revendication 1, **caractérisé en ce que** l'entrée d'écoulement (11) et la sortie d'écoulement (12) sont guidées à contre-courant l'une par rapport à l'autre dans la dérivation (4b) et sont de préférence séparées l'une de l'autre par une paroi intermédiaire.

3. Système de gaz d'échappement (1) selon la revendication 1 ou 2, **caractérisé en ce que** l'unité de soupape (5) comprend deux portions de fermeture supportées à rotation (15a, 15b), une première portion de fermeture (15a), dans la deuxième position (14) de l'unité de soupape (5), fermant l'entrée d'écoulement (11) et une deuxième portion de fermeture (15b), dans la deuxième position (14), fermant la sortie d'écoulement (12) et l'une des portions de fermeture (15a, 15b), dans la première position (13), fermant le conduit de gaz d'échappement (4).

4. Système de gaz d'échappement (1) selon la revendication 3, **caractérisé en ce que** les portions de fermeture (15a, 15b) sont réalisées sous forme de clapets de fermeture qui sont connectés l'un à l'autre par le biais d'un élément de liaison supporté à rotation (16).

5. Système de gaz d'échappement (1) selon l'une quelconque des revendications précédentes, **caractérisé en ce que** le dispositif de traitement de gaz d'échappement (10) et la dérivation (4b) du conduit de gaz d'échappement (4) sont connectés l'un à l'autre de manière détachable par le biais d'une extrémité de raccordement (18) de la dérivation (4b) et d'une pièce de raccordement correspondante (19) du dispositif de traitement de gaz d'échappement (10).

6. Système de gaz d'échappement (1) selon l'une quelconque des revendications précédentes, **caractérisé en ce que** la dérivation (4b) recevant l'entrée d'écoulement et la sortie d'écoulement (11, 12) et une portion du conduit de gaz d'échappement (4) recevant l'unité de soupape (5) sont réalisées sous forme de pièce de connexion en T d'une seule pièce qui peut être connectée de manière détachable au conduit de gaz d'échappement (4) .

7. Système de gaz d'échappement (1) selon l'une quelconque des revendications précédentes, **caractérisé en ce que** l'unité de soupape (5) ou la pièce de liaison en T la recevant se raccorde directement du côté de la sortie d'écoulement à un collecteur de gaz d'échappement (4a) du conduit de gaz d'échappement (4).

8. Système de gaz d'échappement (1) selon l'une quelconque des revendications précédentes, **caractérisé en ce que** le dispositif de traitement de gaz d'échappement (10) comprend au moins un catalyseur (35) dans une unité structurelle avec un côté qui présente une ouverture d'alimentation (38) pour le gaz d'échappement dans l'unité structurelle et une ouverture d'évacuation (46) pour le gaz d'échappement hors de l'unité structurelle, et le catalyseur (38) comprend un substrat monolithique et un premier groupe (42) de conduits est disposé dans l'unité structurelle de manière à pouvoir être traversé par le substrat dans un premier sens d'écoulement et un deuxième groupe (44) de conduits est disposé dans l'unité structurelle de manière à pouvoir être traversé par le substrat dans un deuxième sens d'écoulement différent du premier.

9. Système de gaz d'échappement (1) selon la revendication 8, **caractérisé en ce que** le premier groupe (42) de conduits par le substrat est situé en amont du deuxième groupe (44) de conduits par le substrat.

10. Système d'échappement (1) selon l'une quelconque des revendications 8 à 9, **caractérisé en ce qu'**un canal d'alimentation en gaz d'échappement (39) dans l'unité structurelle conduit depuis l'ouverture d'alimentation (38) au premier groupe (42) de conduits par le substrat et/ou un conduit d'évacuation de gaz d'échappement (45) conduit depuis le deuxième groupe (42) de conduits par le substrat jusqu'à l'ouverture d'évacuation (46).

11. Système de gaz d'échappement (1) selon l'une quelconque des revendications 8 à 10, **caractérisé en ce que** l'unité structurelle présente un dispositif de déviation pour modifier le sens d'écoulement du gaz d'échappement s'écoulant à travers l'unité structurelle, le dispositif de déviation étant disposé en aval du premier groupe (42) de conduits du catalyseur (35) et en amont du deuxième groupe (44) de conduits du catalyseur (35) .

12. Système de gaz d'échappement (1) selon l'une quelconque des revendications 8 à 11, **caractérisé en ce que** le premier groupe (42) de conduits du catalyseur (35) et le deuxième groupe (44) de conduits du catalyseur (35) sont situés l'un par rapport à l'autre de telle sorte que l'un des groupes (42, 44) du catalyseur (35) entoure concentriquement l'autre des groupes (42, 44) du catalyseur (35).

13. Système de gaz d'échappement (1) selon l'une quelconque des revendications précédentes, **caractérisé en ce qu'**en aval de la turbine (3) sont disposés d'autres catalyseurs (6) et/ou d'autres filtres (7).

14. Système de gaz d'échappement (1) selon l'une quelconque des revendications précédentes, **caractérisé en ce que** le moteur à combustion interne (2) est un moteur diesel.

15. Véhicule automobile présentant un système de gaz d'échappement (1) selon l'une quelconque des revendications précédentes.
